# EUROPÄISCHE PATENTANMELDUNG

(11) **EP 4 571 165 A1**
(43) Veröffentlichungstag der Anmeldung: **18.06.2025**
(21) Anmeldenummer: 24218444.8
(22) Anmeldetag: 09.12.2024
(51) Int. Cl.: F16L 27/10, F16L 27/11, F16L 27/12, F16L 51/02

(54) **VERBINDUNGSANORDNUNG ZUR VERBINDUNG EINER FLUIDLEITUNG MIT EINEM AGGREGATSEITIGEN ANSCHLUSSSTUTZEN**

(30) Priorität: 11.12.2023 DE 102023212487
(71) Anmelder: ContiTech Techno-Chemie GmbH, 61184 Karben (DE)
(72) Erfinder: Sperling, Philipp, 34346 Hann. Münden (DE); Stolle, Enrico, 34346 Hann. Münden (DE); Flach, Axel, 34346 Hann. Münden (DE)
(74) Vertreter: Preusser, Andrea

(57) **Zusammenfassung**

Die Erfindung betrifft eine Verbindungsanordnung (10', 10", 10‴) mit einem Anschlusskopf (11) zum Verbinden mit einem aggregatseitigen Anschlussstutzen und einem Leitungsabschnitt (12) zum Führen eines Fluides, wobei der Leitungsabschnitt (12) mit dem Anschlusskopf (11) fluidübertragend verbunden oder verbindbar ist, wobei wenigstens ein Ausgleichsabschnitt (13) zum Ausgleichen von Toleranzen und/oder zur Längenanpassung vorgesehen ist, der den Leitungsabschnitt (12) mit dem Anschlusskopf (11) verbindet, wobei der Ausgleichsabschnitt (13) so angepasst ist, dass der Leitungsabschnitt (12) zu dem Anschlusskopf (11) relativbeweglich ist.

## Beschreibung

Die Erfindung betrifft eine Verbindungsanordnung zur Verbindung einer Fluidleitung mit einem aggregatseitigen Anschlussstutzen. Eine Verbindungsanordnung nach dem Oberbegriff des Patentanspruchs 1 ist beispielsweise aus der DE 10 2004 024 714 A1 bekannt.

Zur Verbindung von Fluidleitungen im Automobilbau werden häufig Kupplungen eingesetzt, die einen nach dem Verband der deutschen Automobilindustrie "VDA" standardisierten Anschlussstutzen aufweisen. Ein derartiger Anschlussstutzen eignet sich hervorragend für den Anschluss von Fluidleitungen von Kühlwassersystemen, Kraftstoffleitungen bzw. Benzinleitungen oder dergleichen und zeichnet sich durch seine hohe Flexibilität aus. Um eine Fluidleitung an den Anschlussstutzen anschließen zu können, sind aus dem Stand der Technik eine Vielzahl von Lösungen bekannt. Insbesondere ist in der DE 10 2017 212 004 A1 eine Steck-kupplung beschrieben, die mit einem solchen Anschlussstutzen verbindbar ist.

Aus der eingangs genannten DE 10 2004 024 714 A1 ist ferner eine Kupplungsmuffe bekannt, dies es ermöglicht, einen medienführenden Schlauch an einen aggregatseitigen Anschlussstutzen anzuschließen. Die Kupplungsmuffe umfasst ein Muffenstück und ein gerades oder abgewinkeltes Anschlussrohr, dessen Drehlage beliebig ausrichtbar ist. Dies ermöglicht zwar, die Anschlussstelle für einen Schlauch um eine Drehachse des Anschlussrohres anzupassen. Oftmals besteht aber, insbesondere bei der Anwendung in einem Kraftfahrzeug, nur ein sehr begrenzter Bauraum, der es erschwert, Fluidleitungen ohne bauraumbedingte Anpassung anzuschließen.

Aufgabe der Erfindung ist es daher, eine Verbindungsanordnung zur Verfügung zu stellen, die einerseits die Anordnung einer Fluidleitung in einem begrenzten Bauraum erleichtert und andererseits einen Toleranzausgleich ermöglicht.

Erfindungsgemäß wird die vorstehend genannte Aufgabe durch den Gegenstand des Anspruchs 1 gelöst.

Konkret wird die Aufgabe durch eine Verbindungsanordnung mit einem Anschlusskopf zur Verbindung mit einem aggregatseitigen Anschlussstutzen und einem Leitungsabschnitt zum Führen eines Fluides gelöst, wobei der Leitungsabschnitt mit dem Anschlusskopf fluidübertragend verbunden oder verbindbar ist. Erfindungsgemäß weist die Verbindungsanordnung wenigstens ein Ausgleichsabschnitt zum Ausgleichen von Toleranzen und/oder zur Längenanpassung auf, der den Leitungsabschnitt mit dem Anschlusskopf verbindet, wobei der Ausgleichsabschnitt so angepasst ist, dass der Leitungsabschnitt zu dem Anschlusskopf relativbeweglich ist.

Ein wesentlicher Gedanke der Erfindung besteht somit darin, einen Ausgleichsabschnitt zwischen dem Anschlusskopf und dem Leitungsabschnitt einer Fluidleitung anzuordnen, der eine Anpassung der Lage des Leitungsabschnitts in Bezug auf den Anschlusskopf erlaubt. Der Ausgleichsabschnitt ist dazu derart ausgebildet, dass der Leitungsabschnitt in Bezug auf den Anschlusskopf relativbeweglich ist.

Der Leitungsabschnitt ist also zum dem Anschlusskopf hin oder von diesem wegbewegbar, wobei der Leitungsabschnitt und der Anschlusskopf mit dem Ausgleichsabschnitt verbunden sind. Bevorzugt ist der Ausgleichsabschnitt so angepasst, dass der Leitungsabschnitt in einer Längsrichtung in Bezug auf den Anschlusskopf verschiebbar ist. Dadurch ist eine Längenanpassung der Verbindungsanordnung möglich, um eine Lageänderung des Leitungsabschnitts in Längsrichtung zu realisieren. Mit anderen Worten ist der Leitungsabschnitt durch den Ausgleichsabschnitt in Bezug auf den Anschlusskopf längsbeweglich angeordnet. Zumindest der Anschlusskopf und der Ausgleichsabschnitt können dazu auf einer gemeinsamen Längsachse liegen. Es ist möglich, dass der Ausgleichsabschnitt so ausgebildet ist, dass der Leitungsabschnitt in Bezug auf den Anschluss-kopf seitlich versetzbar ist. Dadurch kann ein Ausgleich in Querrichtung, d.h. quer zur Längsrichtung erfolgen. Dies ist insbesondere dann von Vorteil, wenn ein Winkelausgleich erforderlich ist.

Die Erfindung hat somit den Vorteil, dass sie einen Ausgleich von Toleranzen und Ungenauigkeiten ermöglicht, die bspw. durch die Montage und/oder Fertigung der Komponenten der Verbindungsanordnung bedingt sind. Des Weiteren hat die Erfindung den wesentlichen Vorteil, dass durch den Ausgleichsabschnitt eine Anpassung des Leitungsabschnitts entfällt bzw. entfallen kann, um die Fluidleitung in einem vorgegebenen Bauraum, bspw. in einem Kraftfahrzeug, anzuordnen. Dies erleichtert die Montage der Fluidleitung und somit den Anschluss an einen aggregatseitigen Anschlussstutzen.

Wie vorstehend beschrieben ist, verbindet der Ausgleichsabschnitt den Leitungsabschnitt mit dem Anschlusskopf. Der Ausgleichsabschnitt weist dazu vorzugsweise zwei Längsenden auf, wobei der Ausgleichsabschnitt durch das erste Längsende mit dem Anschlusskopf und durch das zweite Längsende mit dem Leitungsabschnitt fluidübertragend verbunden ist.

Die erfindungsgemäße Verbindungsanordnung kommt bevorzugt in Kraftfahrzeugen zur Verbindung einer Fluidleitung mit einem aggregatseitigen Anschlussstutzen zum Einsatz. Der Anschlussstutzen kann bspw. Teil eines Wasserkühlers, eines Motorblocks, eines Ladeluftkühlers oder dergleichen sein. Wesentlich ist, dass die Verbindungsanordnung dazu geeignet ist, für die Verbindung jeglicher fluidführenden Leitung mit einem Anschlussstutzen eingesetzt zu werden. Die erfindungsgemäße Verbindungsanordnung umfasst somit ein breites Anwendungsgebiet.

Vorteilhafte Ausführungsformen der Erfindung sind in den abhängigen Ansprüchen angegeben.

Bei einer bevorzugten Ausführungsform ist der Ausgleichsabschnitt derart flexibel, insbesondere elastisch verformbar, ausgebildet, dass dieser entlang seiner Längsachse komprimierbar oder streckbar ist. Mit anderen Worten weist der Ausgleichsabschnitt eine Längsachse auf, wobei eine Länge des Ausgleichsabschnitts in Längsrichtung veränderbar ist. Der Ausgleichsabschnitt kann dazu eine dafür vorgesehene Form aufweisen, die ein Komprimieren bzw. Strecken des Ausgleichsabschnitts ermöglicht. Zusätzlich oder alternativ kann der Ausgleichsabschnitt aus einem elastischen Material gebildet sein, das eine Längenänderung erlaubt. Bei dieser Ausführungsform ist von Vorteil, dass ein Toleranzausgleich bzw. eine Längenänderung auf einfache Weise realisiert wird.

Bei einer weiteren bevorzugten Ausführungsform weist der Ausgleichsabschnitt entlang seiner Längsachse mehrere Rippen zur Bildung eines Faltenbalges auf, die sich radial nach außen erstrecken und vorzugsweise dünnwandig ausgebildet sind. Mit anderen Worten umfasst der Ausgleichsabschnitt vorzugsweise eine rippenförmige Wandung, die einen Faltenbalg bildet. Die Ausgleichsfunktion wird hier durch die zu einem Balg geformte Wandung des Ausgleichsabschnitts übernommen. Durch einen Ziehharmonika-Effekt wird ein Toleranzausgleich, insbesondere Längenausgleich, ermöglicht.

Vorzugsweise umfasst der Ausgleichsabschnitt einen Innenraum, in dem der Leitungsabschnitt längsverschiebbar angeordnet oder anordenbar ist, wobei der Ausgleichsabschnitt wenigstens einen Anschlag zur Begrenzung einer Längsbewegung des Leitungsabschnitts aufweist. Mit anderen Worten taucht der Leitungsabschnitt in den Innenraum des Ausgleichsabschnitts längsbeweglich ein. Um die Längsbewegung in Richtung des Anschlussstutzens zu begrenzen, ist ein Anschlag vorzugsweise in Form einer integral ausgebildeten Kontur vorgesehen. Die Kontur kann radial nach innen, d.h. in den Innenraum verlaufen. Die Kontur ist bspw. durch wenigstens eine Stufe und/oder wenigstens eine Rampe gebildet. Beispielsweise kann die Kontur konisch sein. Bei dieser Ausführungsform ist verhindert, dass der Leitungsabschnitt zu weit in den Ausgleichsabschnitt geschoben und somit einer Beschädigung vorgebeugt wird. Ferner kann der Anschlag zur Zentrierung des Leitungsabschnitts in dem Ausgleichsabschnitt dienen.

Bevorzugt weist der Ausgleichsabschnitt wenigstens einen Formschlussbereich auf und der Leitungsabschnitt umfasst wenigstens ein Eingriffselement, das in dem Formschlussbereich längsverschiebbar geführt ist. Der Formschlussbereich erstreckt sich vorzugsweise in Längsrichtung des Ausgleichsabschnitts. Dies hat den Vorteil, dass ein Längen- oder Toleranzausgleich kontrolliert entlang der Längsachse des Ausgleichsabschnitts erfolgt.

Das Eingriffselement greift vorzugsweise in den Formschlussbereich formschlüssig ein, wobei der Formschlussbereich zusätzlich eine Drehausrichtung des Leitungsabschnitts festlegt. Mit anderen Worten greift das Eingriffselement derart in den Formschlussbereich ein, dass dieser eine Drehbewegung um die Längsachse begrenzt bzw. unterbindet. Der Leitungsabschnitt weist dadurch im verbundenen Zustand eine feste Drehlage auf. Dies erleichtert die Montage in einem vorgegebenen Bauraum.

Bei einer bevorzugten Ausführungsform umfasst der Formschlussbereich wenigstens eine sich in Längsrichtung erstreckende Längsnut, in der das Eingriffselement geführt ist. Die Längsnut weist eine bestimmte Länge auf, der einem Verstellweg des Leitungsabschnitts entspricht. Beispielsweise kann die Längsnut 5 mm bis 50 mm, insbesondere 10 mm bis 40 mm, betragen. Besonders bevorzugt weist die Längsnut eine Länge von 15 mm bis 30 mm, insbesondere ca. 20 mm auf. Andere Längen der Nut sind möglich. Durch die Längsnut und die freie Beweglichkeit des Leitungsabschnitts innerhalb der Längsnut ist der Leitungsabschnitt in Längsrichtung schwimmend gelagert. Dadurch ist die erforderliche Relativlage des Leitungsabschnitts in Bezug auf den Anschlusskopf schnell und einfach einstellbar. Bevorzugt erfolgt dies dynamisch, das heißt stufenlos, was die Montage der Fluidleitung erheblich erleichtert.

Bei einer weiteren bevorzugten Ausführungsform weist der Formschlussbereich mehrere Ausnehmungen auf, die in Längsrichtung nacheinander ausgebildet sind, wobei das Eingriffselement zur Einstellung einer Längsposition des Leitungsabschnitts zumindest in eine der Ausnehmungen einrastbar oder eingerastet ist. Bei dieser Ausführungsform stellt der Ausgleichsabschnitt vorbestimmte Längspositionen bereit, an denen der Leitungsabschnitt fixierbar ist. Die Anpassung der Längsposition des Leitungsabschnitts erfolgt hier gestuft, d.h. rasterartig.

Die Ausnehmungen sind vorzugsweise Durchgangsöffnungen, die einen freien Durchgang von dem Innenraum des Ausgleichsabschnitts radial nach außen bilden. Die Ausnehmungen können bspw. auch dem Innenraum zugewandte Vertiefungen in dem Ausgleichsabschnitt sein. Das Eingriffselement des Leitungsabschnitts ist vorzugsweise ein Vorsprung, der sich zumindest teilweise in radialer Richtung erstreckt. Bevorzugt umfasst das Eingriffselement wenigstens eine Rastnase. Das Eingriffselement kann alternativ ein Steg oder dergleichen sein. Andere Formen sind möglich.

Besonders bevorzugt ist der Formschlussbereich zungenförmig und in radialer Richtung elastisch verformbar ausgebildet. Dadurch kann beim Einschieben des Leitungsabschnitts in den Ausgleichsabschnitt der Formschlussbereich nach außen elastisch ausweichen, um das Eingriffselement in die Längsnut oder eine der Ausnehmungen einzurasten. Der Formschlussbereich ist also vorzugsweise federnd ausgebildet. Der Formschlussbereich kann auch eine Lasche umfassen. Durch den elastisch verformbaren Formschlussbereich ist schnell und einfach eine Rastverbindung zwischen dem Ausgleichs- und Leitungsabschnitt herstellbar, welche die Längenanpassung und somit die Montage erleichtert.

Der Ausgleichsabschnitt kann integral mit dem Leitungsabschnitt ausgebildet sein. Alternativ kann der Ausgleichsabschnitt ein separates Bauteil bilden. Mit anderen Worten kann der Ausgleichsabschnitt mit dem Leitungsabschnitt einteilig, insbesondere einstückig ausgebildet sein. Alternativ kann der Ausgleichsabschnitt von dem Leitungsabschnitt baulich, insbesondere physisch, getrennt ausgebildet sein. In diesem Fall kann der Ausgleichsabschnitt als Ausgleichselement bezeichnet werden.

Um eine dichte Verbindung zwischen der Verbindungsanordnung und einer von dem Anschlusskopf aufnehmbaren Steckkupplung zu realisieren, nimmt der Ausgleichsabschnitt vorzugsweise wenigstens ein erstes Dichtmittel, insbesondere einen O-Ring, auf, das mit einer Anlagefläche des Anschlusskopfes zusammenwirkt. Bevorzugt ist das erste Dichtmittel an einer der Anlagefläche des Anschlusskopfes gegenüberliegenden Stirnseite des Ausgleichsabschnitts angeordnet. Zwischen der Anlagefläche des Anschlusskopfes und der Stirnseite des Ausgleichsabschnitts ist somit eine Aufnahme, insbesondere eine nutförmige Vertiefung, für das erste Dichtmittel geschaffen.

Es ist von Vorteil, wenn der Ausgleichsabschnitt mit dem Anschlusskopf stoffschlüssig, insbesondere durch Verschweißen, verbunden ist. Hierdurch ist der Ausgleichsabschnitt mit dem Anschlusskopf stabil und dicht verbunden.

Dazu kann der Anschlusskopf wenigstens eine Aufnahme aufweisen, die das erste Längsende des Ausgleichsabschnitts zumindest teilweise aufnimmt. Dadurch ist die Lage des Ausgleichsabschnitts an dem Anschlusskopf bestimmt. Zusätzlich ist durch den dadurch bestehenden Formschluss die Verbindung von Ausgleichsabschnitt und Anschlusskopf verbessert.

Der Leitungsabschnitt weist vorzugsweise wenigstens ein zweites Dichtmittel, insbesondere einen O-Ring, auf, das mit einer Innenfläche des Ausgleichsabschnitts abdichtend in Kontakt steht. Bevorzugt steht das zweite Dichtmittel mit der Innenfläche gleitend in Kontakt. Bei der Längenanpassung bzw. einem Toleranzausgleich wird der Leitungsabschnitt in dem Ausgleichsabschnitt längsverschoben, wobei das zweite Dichtmittel auf der Innenfläche abdichtend gleitet. Hier ist auf einfache Weise eine dichte Verbindung zwischen Leitungs- und Ausgleichsabschnitt bei gleichzeitiger Möglichkeit einen Toleranzausgleich auszuführen realisiert.

Vorzugsweise sind der Anschlusskopf und/oder der Ausgleichsabschnitt und/oder der Leitungsabschnitt als Spritzgussteil ausgebildet, wobei zumindest der Leitungsabschnitt vorzugsweise durch Blasformen gebildet ist. Das Verfahren des Blasformens ist auch unter der Bezeichnung "Blow Molding" bekannt. Dieses Verfahren ermöglicht eine kostengünstige Herstellung von komplexen Bauteilen, die eine Wandung aufweisen. Das Blasformverfahren eignet sich daher gut für die Herstellung des Ausgleichsabschnitts und/oder des Leitungsabschnitts, insbesondere in deren einstückiger Form.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Verbindungsanordnung ausgestaltet sein kann.

In diesen zeigen,
- Fig. 1: eine perspektivische Ansicht einer Verbindungsanordnung nach einem ersten erfindungsgemäßen Ausführungsbeispiel;
- Fig. 2: einen Längsschnitt durch die Verbindungsanordnung gemäß Fig. 1;
- Fig. 3: eine perspektivische Ansicht einer Verbindungsanordnung nach einem zweiten erfindungsgemäßen Ausführungsbeispiel;
- Fig. 4: einen Längsschnitt durch die Verbindungsanordnung gemäß Fig. 3;
- Fig. 5: eine perspektivische Ansicht einer Verbindungsanordnung nach einem dritten erfindungsgemäßen Ausführungsbeispiel; und
- Fig. 6: einen Längsschnitt durch die Verbindungsanordnung gemäß Fig. 5.

Im Folgenden werden für gleiche oder gleichwirkende Teile dieselben Bezugsziffern verwendet.

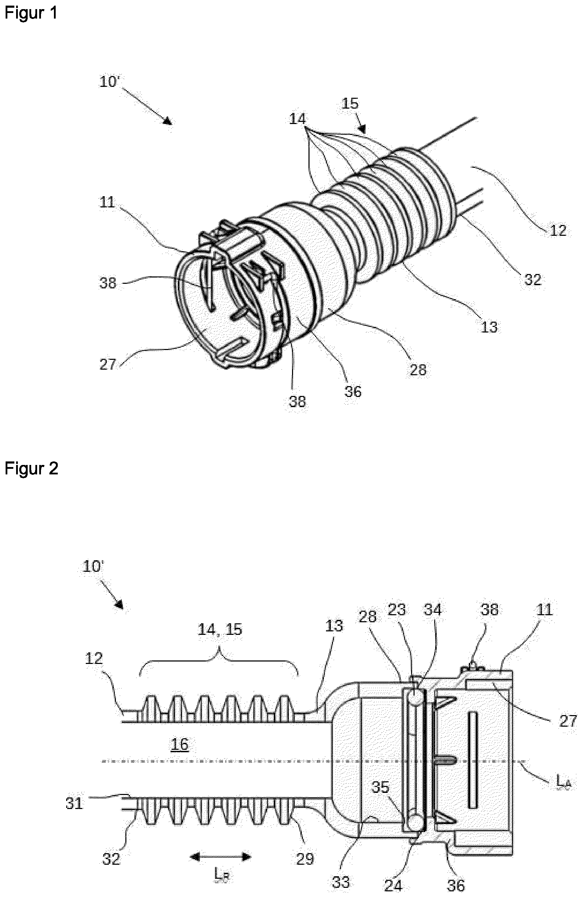

Fig. 1 bis 6 zeigen verschiedene erfindungsgemäße Ausführungsbeispiele einer Verbindungsanordnung 10. Die Verbindungsanordnung 10 dient zum Verbinden einer Fluidleitung an einen aggregatseitigen Anschlussstutzen, der bspw. Teil eines Wasserkühlers, eines Motorblocks, eines Ladeluftkühlers oder dergleichen eines Kraftfahrzeugs ist. Die Verbindungsanordnung 10 ist generell dazu geeignet, für die Verbindung einer fluidführenden Leitung mit einem Anschlussstutzen eingesetzt zu werden. Die erfindungsgemäße Verbindungsanordnung 10 ist somit nicht auf die Anwendung in Kraftfahrzeugen eingeschränkt.

Fig. 1 und 2 zeigen eine Verbindungsanordnung 10' nach einem ersten erfindungsgemäßen Ausführungsbeispiel. Die Verbindungsanordnung 10' weist einen Anschlusskopf 11, einen Leitungsabschnitt 12 und einen Ausgleichsabschnitt 13 auf. Der Ausgleichsabschnitt 13 ist zwischen dem Anschlusskopf 11 und dem Leitungsabschnitt 12 derart angeordnet, dass der Leitungsabschnitt 12 mit dem Anschlusskopf 11 fluidverbunden ist.

Aus den Fig. 1 und 2 geht hervor, dass der Leitungsabschnitt 12 und der Ausgleichsabschnitt 13 integral ausgebildet sind. Mit anderen Worten sind der Leitungsabschnitt 12 und der Ausgleichsabschnitt 13 einstückig ausgebildet. Oder anders gesagt, bilden der Leitungsabschnitt 12 und der Ausgleichsabschnitt 13 ein monolithisches Bauteil. Fig. 2 zeigt einen Längsschnitt durch die Verbindungs-anordnung 10', in dem erkennbar ist, dass der Leitungsabschnitt 12 und der Ausgleichsabschnitt 13 rohrförmig ausgebildet sind, d.h. gemeinsam eine rohrförmige Leitung bilden.

Fig. 2 zeigt ferner, dass der Leitungsabschnitt 12, der Ausgleichsabschnitt 13 und der Anschlusskopf 11 eine gemeinsame Längsachse L_{A} aufweisen. Parallel zur Längsachse L_{A} verläuft dabei die Längsrichtung L_{R}.

In Fig. 1 und 2 ist gut erkennbar, dass der Ausgleichsabschnitt 13 mehrere Rippen 14 aufweist, die in Längsrichtung L_{R} nacheinander angeordnet sind. Die Rippen 14 sind entlang der Längsachse L_{A} aneinandergereiht ausgebildet. Insgesamt sind gemäß Fig. 1 und 2 sechs Rippen 14 ausgebildet, wobei die Erfindung nicht auf diese Anzahl beschränkt ist. Es ist möglich, dass der Ausgleichsabschnitt 13 zumindest zwei, drei oder vier Rippen 14 aufweist. Alternativ kann der Ausgleichsabschnitt 13 mehr als sechs Rippen 14 aufweisen.

Die Rippen 14 erstrecken sich radial über den Umfang des Leitungsabschnitts 12. Die Rippen 14 bilden in Summen einen Faltenbalg 15, der den Ausgleichsabschnitt 13 zum Ausgleichen von Toleranzen oder zur Anpassung seiner Länge die notwendige Flexibilität verleiht. Die Rippen 14 sind dünnwandig ausgebildet. In Fig. 2 ist der Einfachheit halber die Wandung der Rippen 14 nicht dargestellt, sondern lediglich ein exemplarischer Innenraum 16 als Durchgang 31 für ein zu führendes Fluid.

Der Ausgleichsabschnitt 13 weist also eine rippenförmige Wandung 29 auf. Der Faltenbalg 15 ist in Längsrichtung L_{R} komprimierbar oder streckbar. Durch den Faltenbalg 15 ist somit eine Länge des Ausgleichsabschnitts 13 variabel veränderbar. Durch den Faltenbalg 15 kann ein Toleranz- bzw. Längenausgleich zwischen 0 mm und 40 mm, insbesondere 5 mm bis 30 mm, bevorzugt 10 mm bis 25 mm durchgeführt werden.

Der Faltenbalg 15 ist zusätzlich so angepasst, dass der Ausgleichsabschnitt 13 elastisch gebogen werden kann. Dies ist vorteilhaft, wenn der Verlauf des Leitungsabschnitts 12 von der Längsachse L_{A} abweicht. Zusammenfassend ist der Leitungsabschnitt 12 durch den Faltenbalg 15 zu dem Anschlusskopf 11 relativbeweglich.

Der Ausgleichsabschnitt 13 umfasst ferner ein erstes und ein zweites Längsende 28, 32. Das erste Längsende 28 ist mit dem Anschlusskopf 11 verbunden und das zweite Längsende 32 mit dem Leitungsabschnitt 12. Das zweite Längsende 32 geht in den Leitungsabschnitt 12 kontinuierlich über. Das erste Längsende 28 umfasst eine Durchmessererweiterung 33 auf. Ferner weist das erste Längsende 28 eine dem Anschlusskopf 11 zugewandte Stirnseite 34 auf, die in dem Anschlusskopf 11 aufgenommen ist. Das erste Längsende 28 sitz somit in den Anschlusskopf 11 formschlüssig ein. Die Stirnseite 34 des ersten Längsendes 28 weist eine Aufnahme 35 für ein erstes Dichtmittel 23 auf. Der Anschlusskopf 11 umfasst eine Anlagefläche 24, die der Aufnahme 35 gegenüber angeordnet ist. Das erste Dichtmittel 23 ist in der Aufnahme 25 aufgenommen und gegen die Anlagefläche 24 des Anschlusskopfes 11 gepresst. Das erste Dichtmittel 23 dient zur Abdichtung der Verbindungsanordnung 10' gegen eine von dem Anschlusskopf 11 aufnehmbaren Steckkupplung. Vorzugsweise ist das erste Dichtmittel 23 als O-Ring ausgebildet. Anderen Dichtungstypen sind möglich.

Das erste Längsendes 28 des Ausgleichsabschnitts 13 ist mit dem Anschlusskopf 11 außenumfänglich stoffschlüssig, bevorzugt durch Schweißen, verbunden. Vorzugsweise sind der Anschlusskopf 11 und der integral miteinander ausgebildete Leitungs- und Ausgleichsabschnitt 12, 13 Spritzgussteile, d.h. durch Spritzgießen hergestellt. Besonders bevorzugt ist der Leitungs- und Ausgleichsabschnitt 12, 13 durch ein Blasformbauteil ("Blow Molding Bauteil") gebildet.

Gemäß Fig. 1 und 2 weist der Anschlusskopf 11 einen Anschlusskörper 36 auf, der eine Aufnahme 27 für einen aggregatseitigen Anschlussstutzen umfasst. Der Anschlusskopf 11 ist damit so ausgebildet, dass dieser auf einen solchen Anschlussstutzen steckbar ist, wobei die Befestigung des Anschlusskopfes 11 mittels federnder Drahtelemente 38 erfolgt. Bevorzugt ist der Anschlusskopf 11 dazu geeignet einen nach VDA ("Verein der Deutschen Automobilindustrie") Standard ausgebildeten aggregatseitigen Anschlussstutzen aufzunehmen. Dabei ist der Anschlusskopf 11 selbst ebenso VDA-konform gestaltet.

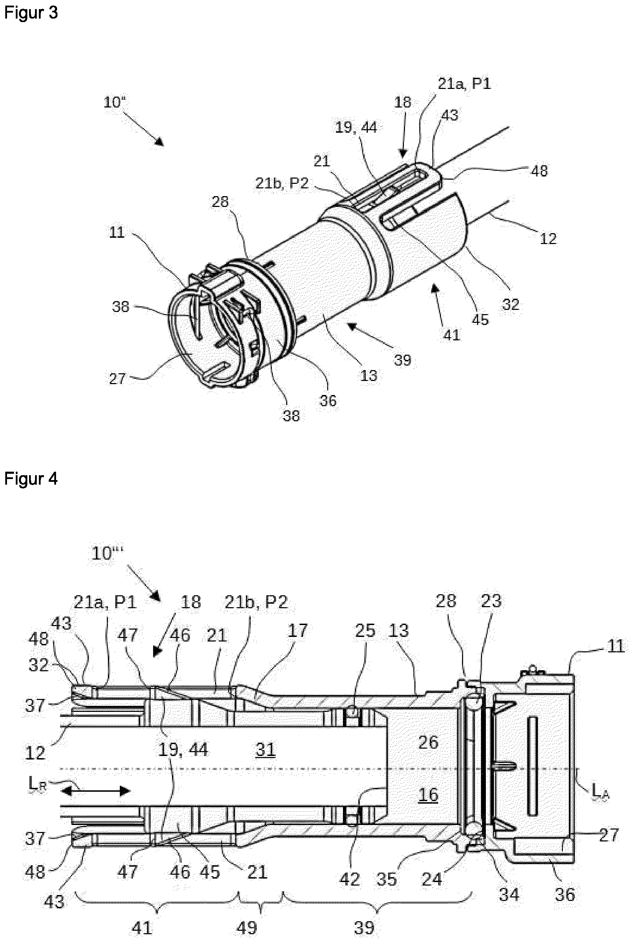

Fig. 3 und 4 zeigen eine Verbindungsanordnung 10" nach einem zweiten erfindungsgemäßen Ausführungsbeispiel. Die Verbindungsanordnung 10" weist einen Anschlusskopf 11, einen Leitungsabschnitt 12 und einen Ausgleichsabschnitt 13 auf. Der Ausgleichsabschnitt 13 ist zwischen dem Anschlusskopf 11 und dem Leitungsabschnitt 12 derart angeordnet, dass der Leitungsabschnitt 12 mit dem Anschlusskopf 11 fluidverbunden ist. In Fig. 4 ist der Einfachheit halber die eigentlich vorliegende Wandung des Leitungsabschnitts 12 nicht dargestellt, sondern lediglich ein exemplarischer Durchgang 31 für ein zu führendes Fluid. Da der Leitungsabschnitt 12 durch Blasformen gebildet ist, weist der Leitungsabschnitt 12 eine im Wesentlichen seiner Außenform folgende Wandung auf.

Aus den Fig. 3 und 4 geht hervor, dass der Leitungsabschnitt 12 und der Ausgleichsabschnitt 13 voneinander baulich getrennte Teile bilden. Mit anderen Worten sind der Leitungsabschnitt 12 und der Ausgleichsabschnitt 13 jeweils als separates Bauteil gebildet. Fig. 3 zeigt einen Längsschnitt durch die Verbindungs-anordnung 10", in dem erkennbar ist, dass der Leitungsabschnitt 12 und der Ausgleichsabschnitt 13 rohrförmig ausgebildet sind. Das heißt, der Leitungsabschnitt 12 und der Ausgleichsabschnitt 13 bilden jeweils ein rohrförmiges Element. In der folgenden Beschreibung wird der Ausgleichsabschnitt 13 aufgrund der Einzelteilausbildung als Ausgleichselement 13 bezeichnet. Die folgende Beschreibung betreffend das Ausgleichselement 13 gilt auch für den Ausgleichsabschnitt.

Fig. 4 zeigt ferner, dass der Leitungsabschnitt 12, der Ausgleichsabschnitt 13 und der Anschlusskopf 11 eine gemeinsame Längsachse L_{A} aufweisen. Parallel zur Längsachse L_{A} verläuft dabei die Längsrichtung L_{R}.

Bei der Verbindungsanordnung 10" gemäß Fig. 3 und 4 ist das Ausgleichselement 13 so ausgebildet, dass der Leitungsabschnitt 12 zu dem Anschlusskopf 11 relativbeweglich ist. Das Ausgleichselement 13 weist einen Innenraum 16 auf, der in Längsrichtung L_{R} einen freien Durchgang durch das Ausgleichselement 13 bildet. Der Innenraum 16 umfasst entlang der Längsachse L_{A} zwei Längsbereiche 39, 41 mit unterschiedlichen Durchmessern auf. Der erste dem Anschlusskopf 11 zugewandte Längsbereich 39 weist einen kleineren Durchmesser als der zweite Längsbereich 41 auf, der dem Leitungsabschnitt 12 zugewandt ist. Die beiden Längsbereiche 39, 41 grenzen entlang der Längsachse L_{A} aneinander an.

Wie in Fig. 4 erkennbar, erstreckt sich der Leitungsabschnitt 12 mit seinem freien Ende 42 in den Innenraum 16 des Ausgleichselements 13. Konkret ragt der Leitungsabschnitt 12 derart in den Innenraum 16 des Ausgleichselements 13, dass das freie Ende 42 in dem ersten Längsbereich 39 angeordnet ist. Das zweite Längsende 32 weist eine Aufnahme 43 für ein zweites Dichtmittel 25 auf, das radial außen an dem freien Ende 42 angeordnet ist und mit einer Innenfläche 26 ersten Längsbereichs 39 des Ausgleichselements 13 abdichtend zusammenwirkt. Die Innenfläche 26 umschließt den Innenraum 16 des Ausgleichselements 13 im ersten Längsbereich 39. Vorzugsweise ist das zweite Dichtmittel 25 als O-Ring ausgebildet. Anderen Dichtungstypen sind möglich.

Das zweite Dichtmittel 25 und die Innenfläche 26 wirken derart zusammen, dass der Leitungsabschnitt 12 in Längsrichtung L_{R} verschiebbar ist. Der Leitungsabschnitt 12 gemäß Fig. 3 und 4 ist somit in dem Ausgleichselement 13 schwimmend gelagert. Der Leitungsabschnitt 12 ist in Längsrichtung L_{R} zwischen zwei Endpositionen P1, P2 variabel verschiebbar ist. Die Endpositionen P1, P2 des Leitungsabschnitts 12 sind durch zwei Formschlussbereiche 18 des Ausgleichselements 13 bestimmt. Der jeweilige Formschlussbereich 18 befindet sich im zweiten Längsbereich 41 und sind in Bezug auf die Längsachse L_{A} gegenüberliegend angeordnet.

Die Formschlussbereiche 18 umfassen jeweils eine Lasche 43 mit einer sich in Längsrichtung L_{R} erstreckenden Längsnut 21. Die Längsenden 21a, 21b der Längsnut 21 entsprechen dabei den beiden Endpositionen P1, P2 des Leitungsabschnitts 12. Die Laschen 43 sind in radialer Richtung elastisch verformbar ausgebildet. Mit anderen Worten sind die Laschen 43 federelastisch in dem zweiten Längsbereich 41 des Ausgleichselements 13 angeordnet, sodass ein Einrasten eines Eingriffselements 19 des Leitungsabschnitts 12 möglich ist.

Wie in Fig. 4 gut erkennbar ist, weist der Leitungsabschnitt 12 je Lasche 43 ein Eingriffselement 19 auf, das in die entsprechende Längsnut 21 der Lasche 43 formschlüssig eingreift. Der Leitungsabschnitt 12 ist durch den Eingriff des Eingriffselements 19 in die Längsnut 21 in Längsrichtung L_{R} in Bezug auf den Anschlusskopf 11 relativ bewegbar, sodass ein Toleranzausgleich bzw. eine Längenanpassung vorgenommen werden kann. Beispielsweise kann die Längsnut 21 5 mm bis 50 mm, insbesondere 10 mm bis 40 mm, lang sein. Besonders bevorzugt weist die Längsnut 21 eine Länge von 15 mm bis 30 mm, insbesondere ca. 20 mm auf. Andere Längen der Nut 21 sind möglich.

Die Längsnut 21 bildet für das Eingriffselement 19 eine seitliche Begrenzung. Das heißt, dass der Leitungsabschnitt 12 in Umfangsrichtung fixiert ist. Konkret ist die Drehlage des Leitungsabschnitts 12 dadurch festgelegt.

Das Eingriffselement 19 bildet eine Rastnase 44, die in Längsrichtung L_{R} ausgerichtet ist. Die Rastnase 44 ist auf einem Außenumfang 45 des Leitungsabschnitts 12 ausgebildet. Die Rastnase 44 weist eine schräg ansteigende Rampe 46 und eine Stufe 47 auf. Die Rampe 46 verläuft ausgehend von dem Außenumfang 45 in einer von dem Anschlusskopf 11 wegführenden Richtung ansteigend, wobei anschließend die Stufe 47 im Wesentlichen senkrecht auf dem Außenumfang 45 des Leitungsabschnitts 12 endet. Die Rastnase 44 kann alternativ als Keil bezeichnet werden.

Zur Begrenzung einer Längsbewegung, insbesondere Verstellbewegung, in einer von dem Anschlusskopf 11 wegführenden Längsrichtung L_{R} des Leitungsabschnitts 12 wirkt die Stufe 47 mit dem ersten Nutende 21a der Längsnut 21 zusammen. Um eine Begrenzung einer Längsbewegung des Leitungsabschnitts 12 in einer zu dem Anschlusskopf 11 hinführenden Längsrichtung L_{R} zu schaffen, kann die Rampe 46 mit dem zweiten Nutende 21b der Längsnut 21 zusammenwirken.

Die eigentliche Begrenzung der Längsbewegung des Leitungsabschnitts 12 zum Anschlusskopf 11 hin erfolgt durch einen Anschlag 17 des Ausgleichselements 13. In einem Übergang 49 zwischen dem ersten und dem zweiten Längsbereich 39, 41 des Ausgleichselements 13 ist nämlich ein Anschlag 17 ausgebildet, mit dem der Leitungsabschnitt 12 in Kontakt treten kann. Der Anschlag 17 ist durch eine sich von dem zweiten Längsbereich 41 zum ersten Längsbereich 39 hin verjüngende Innenkontur gebildet. Mit anderen Worten geht der zweite 41 auf den ersten Längsbereich 39 konisch über, sodass eine bauliche, insbesondere integrale, Begrenzung ausgebildet ist. Der Leitungsabschnitt 12 weist eine komplementäre Außenkontur auf, die mit der Innenkontur des Ausgleichselements 13 zur Bewegungsbegrenzung zusammenwirkt.

Die Rampe 46 der Rastnase 44 hat den Vorteil, dass bei einem Zusammenbau von Leitungsabschnitt 12 und Ausgleichselement 13 die Rampe 46 die Lasche 43 anhebt und nach Erreichen der Stufe 47 die Rastnase 44 in die Längsnut 21 einrastet. Um ein Anheben der Laschen 21 zu erleichtern, weisen die Laschen 21 an deren freien Enden 48 eine Fase 37 auf.

Hinsichtlich der dichten und stoffschlüssigen Verbindung von Ausgleichselement 13 und Anschlusskopf 11 sowie die Ausgestaltung des Anschlusskopfes 11 wird auf die vorstehende Beschreibung gemäß Fig. 1 und 2 verwiesen, um eine Dopplung zu vermeiden.

Vorzugsweise sind der Anschlusskopf 11 und das Ausgleichselement Spritzgussteile, d.h. durch Spritzgießen hergestellt. Das Ausgleichselement 13 ist, wie aus Fig. 3 und 4 ersichtlich, als Kunststoffhülse ausgebildet. Besonders bevorzugt ist der Leitungsabschnitt 12 durch ein Blasformbauteil ("Blow Molding Bauteil") gebildet.

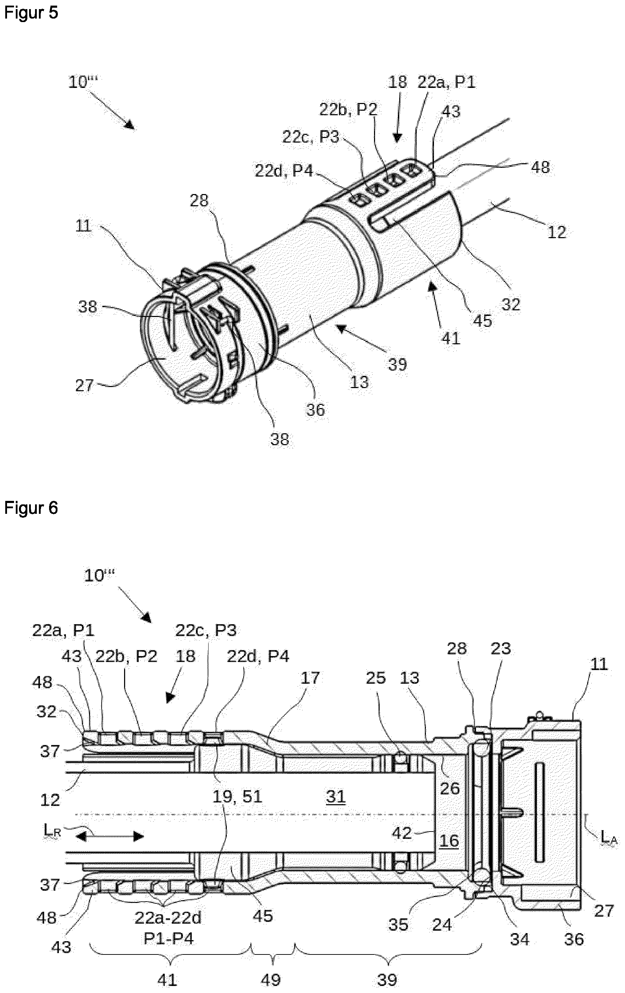

Fig. 5 und 6 zeigen eine Verbindungsanordnung 10‴ nach einem dritten erfindungsgemäßen Ausführungsbeispiel. Im Unterschied zu der Verbindungsanordnung 10" gemäß Fig. 3 und 4 weist die Verbindungsanordnung 10‴ gemäß Fig. 5 und 6 keine Formschlussbereiche 18 bzw. Laschen 43 mit Längsnuten 21 auf, sondern mehrere Ausnehmungen 22a-22d, durch die eine gestufte Einstellung der gewünschten Längsposition des Leitungsabschnitts 12 ermöglicht ist. Ferner weist das Eingriffselement 19 des Leitungsabschnitts 12 gemäß Fig. 5 und 6 eine andere Form auf. Um Dopplungen in der Beschreibung zu vermeiden, wird im Folgenden lediglich auf die bestehenden Unterschiede zur Verbindungsanordnung 10" gemäß Fig. 3 und 4 eingegangen. Die Verbindungsanordnung 10‴ umfasst bis auf die Längsnuten 21 und die rampenförmige Rastnase 44 alle vorstehend in Bezug auf die Verbindungsanordnung 10" gemäß Fig. 3 und 4 beschrieben Merkmale.

In Fig. 6 ist der Einfachheit halber die eigentlich vorliegende Wandung des Leitungsabschnitts 12 nicht dargestellt, sondern lediglich ein exemplarischer Durchgang 31 für ein zu führendes Fluid. Da der Leitungsabschnitt 12 durch Blasformen gebildet ist, weist der Leitungsabschnitt 12 eine im Wesentlichen seiner Außenform folgende Wandung auf.

Bei der Verbindungsanordnung 10‴ gemäß Fig. 5 und 6 ist das Ausgleichselement 13 so ausgebildet, dass der Leitungsabschnitt 12 zu dem Anschlusskopf 11 relativbeweglich ist. Das Ausgleichsprinzip ist dasselbe, wie bei der Verbindungs-anordnung 10" gemäß Fig. 3 und 4.

In Fig. 5 und 6 ist gut erkennbar, dass anstatt der Längsnuten 21 gemäß Fig. 3 und 4 mehrere nacheinander ausgebildete Ausnehmungen 22a-22d in dem Formschlussbereich 18 vorgesehen sind, in die das Eingriffselement 19 zur Einstellung einer Längsposition P1-P4 des Leitungsabschnitts 12 in eine der Ausnehmungen 22a-22d eingerastet ist. Die Ausnehmungen 22a-22d sind in Längsrichtung L_{R} aufgereiht und voneinander beabstandet. Die Ausnehmungen 22a-22d sind so nacheinander angeordnet, dass der Längsabschnitt 12 beispielsweise zwischen 10 mm bis 50 mm, insbesondere 15 mm bis 40 mm, in Längsrichtung L_{R} verstellbar ist. Besonders bevorzugt sind die Ausnehmungen 22a-22d so nacheinander angeordnet, dass der Leitungsabschnitt 12 ca. 20 mm in Längsrichtung L_{R} verschiebbar ist.

Die Ausnehmungen 22a-22d sind so angeordnet, dass sie eine stufenweise Rastverbindung mit dem Eingriffselement 19 ermöglichen. Die Ausnehmungen 22a-22d bilden Durchgangsöffnungen, die einen freien Durchgang von dem Innenraum 16 des Ausgleichselements 13 radial nach außen bilden. Die Ausnehmungen 22a-22d sind, wie in Fig. 5 und 6 erkennbar, rechteckförmig ausgebildet. Andere Formen sind möglich. Die Ausnehmungen 22a-22d weisen jeweils eine dem Innenraum 16 zugewandte Fase 37 auf, die entgegen einer Einschubrichtung des Leitungsabschnitts 12 ansteigend ausgebildet ist. Die Fase 37 ermöglicht ein elastisches Anheben der Lasche 43, um die Längsposition P1-P4 des Leitungsabschnitts 12 von einer P1-P3 zur nächsten Längsposition P2-P4 zu wechseln.

Das Eingriffselement 19 gemäß Fig. 6 ist, anders als das rampenförmige Eingriffselement 19 gemäß Fig. 4, nockenförmig ausgebildet. Mit anderen Worten bildet das Eingriffselement 19 einen Nocken 51. Der Nocken 51 erstreckt sich ausgehend von einem Außenumfang 45 des Leitungsabschnitts 12 radial nach außen. Vorzugsweise verjüngt sich der der Nocken 51 zu seinem freien Ende hin, um ein Anheben der Lasche 43 und somit ein Verschieben des Leitungsabschnitts 12 von einer P1-P3 zur nächsten Längsposition P2-P4 zu erleichtern. Der Nocken 51 weist eine Kontur auf, die im Wesentlichen zur Form der Ausnehmungen 22a-22d komplementär ist.

Wie in Fig. 6 gut erkennbar ist, weist der Leitungsabschnitt 12 je Lasche 43 einen Nocken 51 auf, der in eine der Ausnehmungen 22a-22d der Lasche 43 formschlüssig eingreift. Dabei wirkt der Nocken 51 in Längsrichtung L_{R} und in Umfangsrichtung, jeweils beidseitig, mit der Ausnehmung 22a-22d zusammen. In Fig. 6 greift der Nocken 51 in die Ausnehmung 22d ein, sodass sich der Leitungsabschnitt 12 an der vierten Längsposition P4 befindet.

Der Leitungsabschnitt 12 ist durch den lösbaren Eingriff des Nockens 51 in Längsrichtung L_{R} in Bezug auf den Anschlusskopf 11 relativ bewegbar, sodass ein Toleranzausgleich bzw. eine Längenanpassung vorgenommen werden kann. Die Ausnehmungen 22a-22d bildet für das Eingriffselement 19 eine seitliche Begrenzung. Das heißt, dass der Leitungsabschnitt 12 in Umfangsrichtung fixiert ist. Konkret ist die Drehlage des Leitungsabschnitts 12 dadurch festgelegt.

### Bezugszeichenliste

- 10', 10", 10‴: Verbindungsanordnung
- 11: Anschlusskopf
- 12: Leitungsabschnitt
- 13: Ausgleichsabschnitt, Ausgleichselement
- 14: Rippen
- 15: Faltenbalg
- 16: Innenraum
- 17: Anschlag
- 18: Formschlussbereich
- 19: Eingriffselement
- 21: Längsnut
- 21a: erstes Nutende
- 21b: zweites Nutende
- 22a-22d: Ausnehmungen
- 23: erstes Dichtmittel
- 24: Anlagefläche
- 25: zweites Dichtmittel
- 26: Innenfläche
- 27: Aufnahme des Anschlusskopfes
- 28: erstes Längsende des Ausgleichsabschnitts
- 29: Wandung des Ausgleichsabschnitts
- 31: Durchgang
- 32: zweites Längsende des Ausgleichsabschnitts
- 33: Durchmessennreiterung
- 34: Stirnseite des ersten Längsendes
- 35: Aufnahme der Stirnseite
- 36: Anschlusskörper
- 37: Fase
- 38: Drahtelemente
- 39: erster Längsbereich
- 41: zweiter Längsbereich
- 42: freies Ende des Leitungsabschnitts
- 43: Lasche
- 44: Rastnase
- 45: Außenumfang des Leitungsabschnitts
- 46: Rampe
- 47: Stufe
- 48: freies Ende der Laschen
- 49: Übergang
- 51: Nocken
- L_{A}: Längsachse
- L_{R}: Längsrichtung
- P1-P4: Längspositionen

## Patentansprüche

1. Verbindungsanordnung (10', 10", 10‴) mit einem Anschlusskopf (11) zum Verbinden mit einem aggregatseitigen Anschlussstutzen und einem Leitungsabschnitt (12) zum Führen eines Fluides, wobei der Leitungsabschnitt (12) mit dem Anschlusskopf (11) fluidübertragend verbunden oder verbindbar ist,
**dadurch gekennzeichnet, dass**
wenigstens ein Ausgleichsabschnitt (13) zum Ausgleichen von Toleranzen und/oder zur Längenanpassung vorgesehen ist, der den Leitungsabschnitt (12) mit dem Anschlusskopf (11) verbindet, wobei der Ausgleichsabschnitt (13) so angepasst ist, dass der Leitungsabschnitt (12) zu dem Anschlusskopf (11) relativbeweglich ist.

2. Verbindungsanordnung (10', 10", 10‴) nach Anspruch 1,
**dadurch gekennzeichnet, dass**
der Ausgleichsabschnitt (13) derart flexibel, insbesondere elastisch verformbar, ausgebildet ist, dass dieser entlang seiner Längsachse (L_{A}) komprimierbar oder streckbar ist.

3. Verbindungsanordnung (10', 10", 10‴) nach Anspruch 1 oder 2,
**dadurch gekennzeichnet, dass**
der Ausgleichsabschnitt (13) entlang seiner Längsachse (LA) mehrere Rippen (14) zur Bildung eines Faltenbalges (15) aufweist, die sich radial nach außen erstrecken und vorzugsweise dünnwandig ausgebildet sind.

4. Verbindungsanordnung (10', 10", 10‴) nach einem der vorhergehenden Ansprüche,
**dadurch gekennzeichnet, dass**
der Ausgleichsabschnitt (13) einen Innenraum (16) umfasst, in dem der Leitungsabschnitt (12) längsverschiebbar angeordnet oder anordenbar ist, wobei der Ausgleichsabschnitt (13) wenigstens einen Anschlag (17) zur Begrenzung einer Längsbewegung des Leitungsabschnitts (12) aufweist.

5. Verbindungsanordnung (10', 10", 10‴) nach einem der vorhergehenden Ansprüche,
**dadurch gekennzeichnet, dass**
der Ausgleichsabschnitt (13) wenigstens einen Formschlussbereich (18) und der Leitungsabschnitt (12) wenigstens ein Eingriffselement (19) aufweist, das in dem Formschlussbereich (18) längsverschiebbar geführt ist.

6. Verbindungsanordnung (10', 10", 10‴) nach Anspruch 5,
**dadurch gekennzeichnet, dass**
das Eingriffselement (19) in den Formschlussbereich (18) formschlüssig eingreift, wobei der Formschlussbereich (18) zusätzlich eine Drehausrichtung des Leitungsabschnitts (12) festlegt.

7. Verbindungsanordnung (10', 10", 10‴) nach Anspruch 5 oder 6,
**dadurch gekennzeichnet, dass**
der Formschlussbereich (18) wenigstens eine sich in Längsrichtung (LR) erstreckende Längsnut (21) umfasst, in der das Eingriffselement (19) geführt ist.

8. Verbindungsanordnung (10', 10", 10‴) nach einem der Ansprüche 5 bis 7,
**dadurch gekennzeichnet, dass**
der Formschlussbereich (18) mehrere Ausnehmungen (22a-22d) aufweist, die in Längsrichtung (LR) nacheinander ausgebildet sind, wobei das Eingriffselement (19) zur Einstellung einer Längsposition (P1-P4) des Leitungsabschnitts (12) zumindest in eine der Ausnehmungen (22a-22d) einrastbar oder eingerastet ist.

9. Verbindungsanordnung (10', 10", 10‴) nach einem der Ansprüche 5 bis 8, **dadurch gekennzeichnet, dass**
der Formschlussbereich (18) zungenförmig und in radialer Richtung elastisch verformbar ausgebildet ist.

10. Verbindungsanordnung (10', 10", 10‴) nach einem der vorhergehenden Ansprüche,
**dadurch gekennzeichnet, dass**
der Ausgleichsabschnitt (13) integral mit dem Leitungsabschnitt (12) ausgebildet ist oder der Ausgleichsabschnitt (13) ein separates Bauteil bildet.

11. Verbindungsanordnung (10', 10", 10‴) nach einem der vorhergehenden Ansprüche,
**dadurch gekennzeichnet, dass**
der Ausgleichsabschnitt (13) wenigstens ein erstes Dichtmittel (23), insbesondere einen O-Ring, aufnimmt, das mit einer Anlagefläche (24) des Anschlusskopfes (11) zusammenwirkt.

12. Verbindungsanordnung (10', 10", 10‴) nach einem der vorhergehenden Ansprüche,
**dadurch gekennzeichnet, dass**
der Leitungsabschnitt (12) wenigstens ein zweites Dichtmittel (25), insbesondere einen O-Ring, aufnimmt, der mit einer Innenfläche (26) des Ausgleichsabschnitts (13) abdichtend in Kontakt steht.

13. Verbindungsanordnung (10', 10", 10‴) nach einem der vorhergehenden Ansprüche,
**dadurch gekennzeichnet, dass**
der Anschlusskopf (11) wenigstens eine Aufnahme (27) aufweist, die ein erstes Längsende (28) des Ausgleichsabschnitts (13) zumindest teilweise aufnimmt, wobei der Ausgleichsabschnitt (13) vorzugsweise mit dem Anschlusskopf (11) stoffschlüssig verbunden ist.

14. Verbindungsanordnung (10', 10", 10‴) nach einem der vorhergehenden Ansprüche,
**dadurch gekennzeichnet, dass**
der Anschlusskopf (11) und/oder der Ausgleichsabschnitt (13) und/oder der Leitungsabschnitt (12) als Spritzgussteil ausgebildet sind, wobei zumindest der Leitungsabschnitt (12) vorzugsweise durch Blasformen gebildet ist.
